Europäisches Patentamt

European Patent Office

Office européen des brevets

(11)  **EP 1 216 175 B1**

(19)

(12)  **EUROPÄISCHE PATENTSCHRIFT**

(45) Veröffentlichungstag und Bekanntmachung des Hinweises auf die Patenterteilung:
**01.06.2005  Patentblatt 2005/22**

(51) Int Cl.⁷: **B60T 8/00**, G01D 3/02, G01B 7/16, G01B 7/02

(21) Anmeldenummer: 00964171.3

(22) Anmeldetag: **14.09.2000**

(86) Internationale Anmeldenummer:
**PCT/EP2000/008989**

(87) Internationale Veröffentlichungsnummer:
**WO 2001/019654 (22.03.2001 Gazette 2001/12)**

(54) **VERFAHREN ZUR ERFASSUNG UND AUSWERTUNG VON FAHRDYNAMISCHEN ZUSTÄNDEN EINES KRAFTFAHRZEUGS**

METHOD FOR DETECTING AND EVALUATING THE CONDITIONS OF VEHICLE MOVEMENT DYNAMICS FOR A MOTOR VEHICLE

PROCEDE DE DETECTION ET D'EVALUATION D'ETATS DE LA DYNAMIQUE DE ROULEMENT D'UN VEHICULE A MOTEUR

(84) Benannte Vertragsstaaten:
**DE FR GB**

(30) Priorität: **15.09.1999  DE 19944098**
**26.05.2000  DE 10026111**
**07.09.2000  DE 10044291**

(43) Veröffentlichungstag der Anmeldung:
**26.06.2002  Patentblatt 2002/26**

(73) Patentinhaber:
• **Continental Teves AG & Co. OHG**
  **60488 Frankfurt am Main (DE)**
• **Continental Aktiengesellschaft**
  **30165 Hannover (DE)**

(72) Erfinder:
• **BLECKMANN, Hans**
  **61231 Bad Nauheim (DE)**
• **GOSLAR, Marius**
  **38106 Braunschweig (DE)**

(56) Entgegenhaltungen:
**DE-A- 3 812 904          DE-A- 4 435 160**

EP 1 216 175 B1

## Beschreibung

Die Erfindung betrifft ein Verfahren und eine Regelschaltung zur Erfassung und Auswertung von fahrdynamischen Zuständen eines Kraftfahrzeugs mittels Radkraftsensoren, vorzugsweise mit Reifensensoren, die als Maß für die auf das Rad bzw. den Reifen wirkenden Querkräfte den voreingestellten Luftspalt zwischen mindestens einem rotierenden Encoder und mindestens einem Meßwertaufnehmer heranziehen.

Es ist eine Vielzahl von Verfahren zur Regelung des Fahrverhaltens eines Fahrzeugs bekannt, die Reifensensoren zur Erfassung der an den Reifen angreifenden Kräfte und Momente verwenden. Unter einem Reifensensor (SWT-Sensor) wird hierbei der im oder am Reifen angebrachte Encoder und mindestens ein dem Encoder zugeordneter, stationär am Chassis angeordnete mindestens eine Meßwertaufnehmer verstanden. Während in der EP 04 441 09 B1 die Deformation des Reifenprofilbereichs des Reifens - der Reifenlatsch - überwacht wird, wird in der WO 96/10505 die Deformation der Seitenwand - die Torsionsdeformationen - eines Reifens über eine Zeitspannenmessung zwischen dem Passieren mindestens zweier auf unterschiedlichem Radius zur Rotationsachse angeordneter Marken am rotierenden Rad erfaßt. Ein Reifensensor , der bei einer Verformung des Reifens infolge der an dem Reifen angreifenden Kräfte eine Änderung der Phasenlage und/oder der Amplitude zwischen von Meßwertaufnehmern abgegebenen Ausgangssignalen erfaßt, ist in der WO 97/44673 beschrieben. Die Größe des Luftspalts zwischen dem Encoder bzw. den in der Reifenseitenwand eingelagerten magnetischen Arealen und den z.B. aktiven, magnetoresisten Meßwertaufnehmern bilden die Signale, die für die Zuordnung der auf den Reifen wirkenden Seiten- oder Querkräfte verwendet werden. Die Veränderungen der von dem Meßwertaufnehmer ermittelten Signale bilden folglich die Verformungen bzw. Veränderungen der Reifenseitenwand ab, die sich aufgrund der auf die Räder wirkenden Querkräfte einstellen, während die Änderung der Phasenlage zwischen den zwei auf einem äußeren und einem inneren Radius zur Rotationsachse des Rads angeordneten Meßwertaufnehmern ein Signal für die Berechnung der Längskräfte definieren.

Ein weiterer, mit einem magnetischen Encoder ausgerüsteter Luftreifen, ist in der DE 196 20 582 A1 beschrieben, auf die vollumfänglich verwiesen wird. Die an einem Rad mit einem derartigen Reifen angreifenden Kräfte, die mit den Meßwertaufnehmern oder Signalaufbereitungseinrichtungen in Form von mit Kräften korrelierten Signalen abgebildet werden, dienen in Kraftfahrzeug-Regelungssystemen zur Regelung bzw. Steuerung von Fahrzeugen, insbesondere zur Bemessung und/oder Modulation des Bremsdruckes in den Radbremsen der Räder.

Bei der Ermittlung des funktionalen Zusammenhanges des Amplituden- und/oder Phasensignales zu den auf die Räder bzw. die Reifen wirkenden Kräfte werden Meßfelgen verwendet, wie sie Beispielhaft in der EP 0 352 788 A2 beschrieben sind. Dabei ist es nötig, die Meßwertaufnehmer duplizierbar an dem Chassis bzw. der Radaufhängung anzuordnen, um die vom Luftspalt abhängigen Signale reproduzierbar zu gestalten. Sich bei der Anordnung oder Fertigung der Meßwertaufnehmer ergebende Toleranzen und/oder unterschiedliche Felgensysteme, z.B. mit unterschiedlichen Einpreßtiefen, führen zu Abweichungen bei der Bestimmung der auf die Räder bzw. Reifen wirkenden Kräfte.

Der Erfindung liegt die Aufgabe zugrunde, eine fehlerreduzierte Auswertung von Radkräften, insbesondere von mittels Reifensensoren erfassten Verformungen der Felge und/oder des Reifens, zu ermöglichen.

Diese Aufgabe wird erfindungsgemäß durch die Merkmale der unabhängigen Ansprüche gelöst. Abhängige Ansprüche sind auf bevorzugte Ausführungsformen gerichtet.

Vorteilhaft kann zur Erfassung und Auswertung von fahrdynamischen Zuständen eines Kraftfahrzeugs mittels Radkraftsensoren, vorzugsweise mit Reifensensoren, als Maß für die auf das Rad bzw. den Reifen wirkenden Querkräfte der voreingestellte Luftspalt zwischen mindestens einem rotierenden Encoder und mindestens einem Meßwertaufnehmer herangezogen werden. Dadurch, daß erfindungsgemäß der von dem Luftspalt abhängige Betriebspunkt des Ausgangssignals des Meßwertaufnehmers oder einer z.B. dem Meßwertaufnehmer nachgeschalteten Signalaufbereitungseinrichtung unabhängig von dessen Voreinstellung eingestellt wird, läßt sich ohne Verlust an Signalqualität das Ausgangssignal fehlerreduziert verarbeiten, da es unabhängig von diesem voreingestellten Abstand zwischen Meßwertaufnehmer und Encoder ermittelt wird. Es lassen sich Felgen mit unterschiedlicher Einpreßtiefe, jedoch mit gleicher Steifigkeit, verwenden. Hinzu kommt, daß der Abstand des Meßwertaufnehmers beliebig über den Auflösungsbereich variiert werden kann, ohne daß Anpassungen der funktionalen Abbildung zwischen der Amplitude und der Querkraft erforderlich sind.

Vorteilhaft ist eine gattungsgemäße Regelschaltung so augestaltet, daß zur Erfassung und Auswertung von fahrdynamischen Zuständen eines Kraftfahrzeugs mittels Radkraftsensoren, vorzugsweise mit Reifensensoren, die als Maß für die auf das Rad bzw. den Reifen wirkenden Querkräfte den voreingestellten Luftspalt zwischen mindestens einem rotierenden Encoder und mindestens einem Meßwertaufnehmer heranziehen, sie eine Ermittlungseinheit enthält, die den von dem Luftspalt abhängigen Betriebspunkt des Ausgangssignals des Meßwertaufnehmers oder einer Signalaufbereitungseinrichtung unabhängig von dessen Voreinstellung einstellt.

Die Erfindung sieht vor, das Verfahren und die Regeschaltung so auszugestalten, daß eine Adaption des Ausgangssignals an die fahrzeugspezifischen Abstände zwischen dem Meßwertaufnehmer und dem Encoder erfolgt.

Ein zweckmäßiges Verfahren und eine Regelschaltung zeichnen sich dadurch aus, daß das Ausgangssignal bei stationärem, längs- bzw. querkraftfreiem Fahrverhalten auf mindestens einen Nennwert normiert wird. Das stationäre, längs- bzw. querkraftfreie Fahrverhalten wird mit Hilfe von Eingangsgrößen festgestellt, die von herkömmlichen Sensoren bereitgestellt werden und die mindestens die Querbeschleunigung, die Längsbeschleunigung und die Lenkwinkelgeschwindigkeit umfassen. Geeigneterweise wirken zu diesem Zeitpunkt kleine oder nahezu keine Längs- bzw. Querkräfte auf das Rad bzw. den Reifen. Dabei können folgende Bedingungen einzeln oder in beliebiger Kombination einem stationären, längs- und querkraftfreien Fahrverhalten zugrunde gelegt sein:

|Querbeschleunigung|< 0,07g
|Längsbeschleunigung|< 0,1g
|Lenkwinkel|< 1°
|Lenkwinkelgeschwindigkeit|< 20[Grad/s]
Vorwärtsfahrt
Gangabhängige Geschwindigkeit

1.Gang<10 km/h
2.Gang<30 km/h
3.Gang<50 km/h
4.Gang<100 km/h
5.Gang<150 km/h

Wenn vorzugsweise alle diese Bedingungen über einen Zeitraum von ca.70 ms stabil sind, wird derjenige Wert (Nennwert) festgelegt, auf den das Ausgangssignal bezogen (normiert) werden kann.

Das von dem Meßwertaufnehmer oder einer Signalaufbereitung zur Verfügung gestellte Ausgangssignal ist ein sinusförmiges Wechselspannungs- oder -stromsignal, dessen Nennwert bei jedem Spitzenwert der Halbwelle (Amplitude) bzw. bei jedem Wechsel der Pole oder Marken des Encoders bestimmt wird, wenn die Bedingungen des stationären Fahrverhaltens erfüllt sind. Dem Nennwert wird ein Wert zugeordnet, der den Nullpunkt(Offset) der auf das Rad und/oder den Reifen wirkenden Querkraft wiedergibt.

Die Bestimmung der Querkräfte erfolgt dann während dynamischer Zustände des Fahrzeugs in Abhängigkeit von den Amplitudenänderungen nach der Beziehung

$$Amp_{Nutzwert} = \frac{Amp}{Amp_{Nennwert}}$$

mit Amp = Ausgangssignal (Amplitude), $Amp_{Nennwert}$ = normiertes Ausgangssignal (Nennwert), $Amp_{Nutzwert}$ = Verhältnis der Amplitude zur normierten Nennamplitude. Zusätzlich können mittels Umkehrfunktion der Abhängigkeit der Amplitude von dem Luftspalt die Amplitudenänderungen auf Abstandsänderungen nach der Beziehung

$$Dis_{Nutzwert} = k*\ln\left(\frac{Amp}{Amp_{Nennwert}}\right) = k*(\ln(Amp) - \ln(Amp_{Nennwert})) = k*\ln(Amp) - \text{Nennabstand}$$

zurückgeführt werden, mit $Dis_{Nutzwert}$ = Abstandsänderungen und k = negative Konstante die aus der Sensorkennlinie gemäß Figur 4 ermittelt wird.

Die Querkräfte können dann im Wesentlichen als Funktion der Abstandsänderungen ermittelt werden.

Ein Ausführungsbeispiel der Erfindung ist in der Zeichnung dargestellt und wird im folgenden näher beschrieben.

Es zeigen

Figur 1a,b     eine Regelschaltung zur Erfassung und Auswertung der Verformungen des Rades unter Quer- bzw. Seitenkräften

Figur 2     eine Kennline des Meßwertaufnehmers eines Reifensensors

Figur 3     die Kennlinie gemäß Figur 2, Gleichspannungs- und Vorzeichen bereinigt

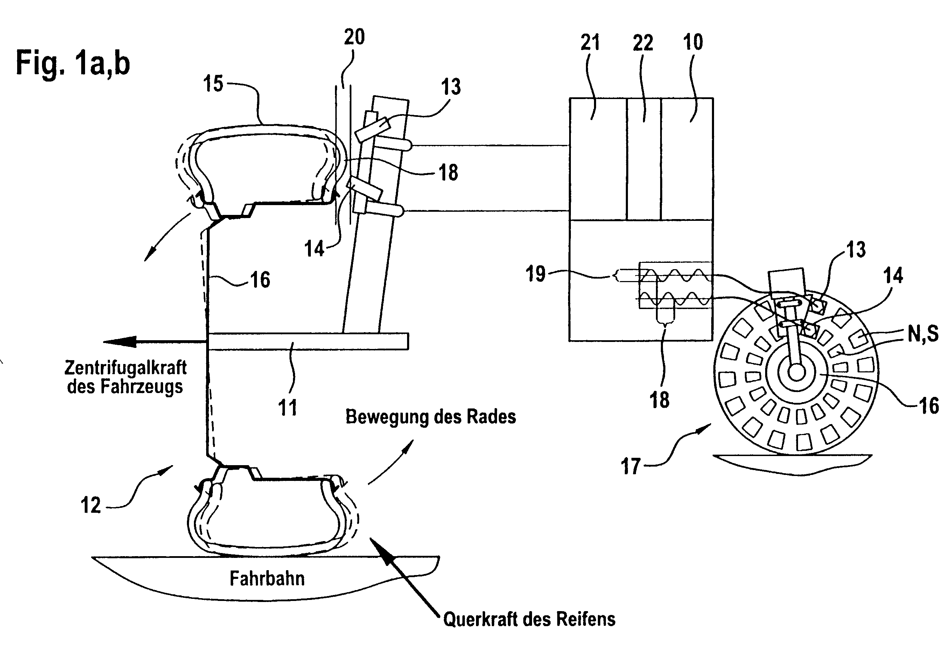

Figur 1 a und b zeigen eine Regelschaltung 10, die mit zwei in radialem Abstand von der Rotationsachse 11 des Rades 12 am Chassis eines Kraftfahrzeugs angeordneten magnetfeldempfindlichen Meßwertaufnehmern 13, 14 verbunden ist. Die Regelschaltung kann Bestandteil der Meßwertaufnehmer oder eine separate Einheit bzw. Bestandteil von ABS (Antiblockierregelsystem), von ASR (Antriebsschlupfregelung), von ESP (Elektronisches Fahrstabilitätsregelungssystem), von EHB (Elektrohydraulisches Bremsregelungssystem), eines Fahrwerksregelungssystems und/oder eines EMB (Elektomechanisches Brems-)-Regelungssystems sein. Der Fahrzeugreifen 15 weist einen Encoder 17 mit permanentmagnetischen Arealen mit wechselnder Polarität N, S auf. Die permanentmagnetischen Areale N, S sind in der Reifenwandung 18 des Rades 12 eingelagert. Zwischen dem Encoder 17 und den Meßwertaufnehmern 13, 14 ist ein Abstand voreingestellt(ein Luftspalt 20). Die Meßwertaufnehmer 13, 14 erfassen bei einer Verformung des Rades ( = Felge 16 mit dem Reifen 15) infolge der am Reifen angreifenden Längskräfte eine Änderung der Phasenlage 18 die zwischen den von den Meßwertaufnehmern 13, 14 abgegebenen Meßsignalen auftritt. Weiterhin erfasst mindestens der eine Meßwertaufnehmer 13 bei einer Verformung des Rades 12 infolge der am Reifen 15 angreifenden Querkräfte eine Änderung der Amplitude 19 des Meßsignales. Das Meßsignal wird durch einen sensorintegrierten elektronischen Schaltkreis verstärkt und in ein Ausgangssignal gewandelt. In einer Ermittlungseinheit 21 wird der von dem Luftspalt 20 abhängige Betriebspunkt des Ausgangssignals des Meßwertaufnehmers 13 unabhängig von der Voreinstellung einstellt. Hierzu wird das Ausgangssignal bei stationärem Fahrverhalten des Fahrzeugs auf einen Nennwert normiert und über Mittel 21 der Nennwert mit dem Querkraft-Nullpunkt korreliert. Danach besteht ein reproduzierbarer Zusammenhang zwischen der Veränderung des Amplitudensignals und der Veränderung der Querkraft.

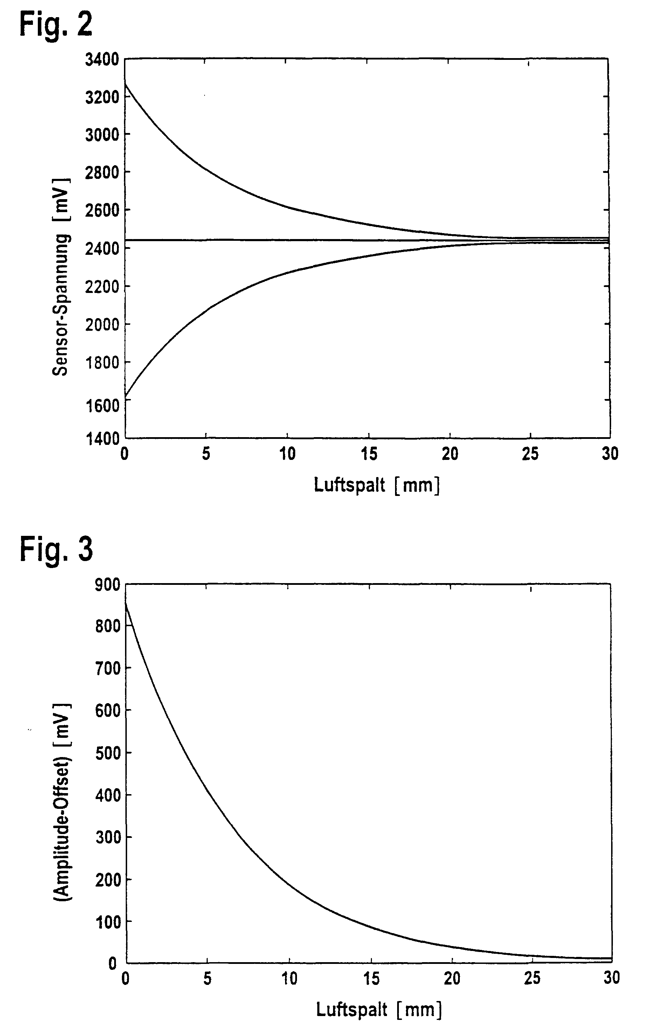

Das sinusförmige Ausgangssignal, das durch die Wirkung des Encoders 17 am magnetfeldempfindlichen Meßwertaufnehmer 13 entsteht und dessen Spitzenwert mit dem Luftspalt 20 variiert, kann ein Wechselspannungssignal oder ein Wechselstromsignal sein. Das Wechselstromsignal kann in einer dem Meßwertaufnehmer 13 zugeordneten Signalaufbereitungseinrichtung in ein Wechselspannungssignal transformiert werden. Figur 3 und 4 zeigt den Zusammenhang zwischen dem Luftspalt 20 und dem Amplitudensignal des Meßwertaufnehmers 13, und zwar in nichtlinearer, nahezu exponentieller Form. In Figur 2 ist die Spannung des Ausgangssignals (Sensor-Spannung) über dem Luftspalt 20 aufgetragen, während Figur 3 das Ausgangssignal, Gleichspannungs- und Vorzeichen bereinigt, über dem Luftspalt aufgetragen ist.

Das Verfahren nach der Erfindung arbeitet wie folgt:

Nach dem Start des Kraftfahrzeugs wird das Fahrverhalten mit Signalen von konventionellen Sensoren, wie Querbeschleunigungsund Längsbeschleunigungssensoren, Gierratensensoren, Lenkwinkelsensoren u.dgl., ermittelt, da die Adaptation des Amplitudensignals an den Luftspalt 20 nur bei stationären Bedingungen erfolgen soll. Um ein stationäres, längs- bzw. querkraftfreies Fahrverhalten festzustellen, sollen vorzugsweise folgende Bedingungen erfüllt sein:

|Querbeschleunigung|< 0,07g

|Längsbeschleunigung|< 0,1g

|Lenkwinkel|< 1°

|Lenkwinkelgeschwindigkeit|< 20[Grad/s]

Vorwartsfahrt

Gangabhangige Geschwindigkeit

    1.Gang<10 km/h
    2.Gang<30 km/h
    3.Gang<50 km/h
    4.Gang<100 km/h
    5.Gang<150 km/h

Wenn diese Bedingungen erfüllt und ca. 70 ms stabil sind, liegt ein stationäres, längs- bzw. querkraftfreies Fahrverhalten vor. Das Amplitudensignal wird dann bei jedem Spitzenwert der Halbwelle bzw. bei jedem Wechsel der magnetischen Areale N, S bzw. Pole oder Marken des Encoders 17 auf einen Nennwert normiert. Dieser Nennwert wird mit einem Querkraft-Nullpunkt bzw. Kraft-Offset korreliert, der nahezu zeitgleich mit einem Kraftmeßelement, vorzugsweise einer Meßfelge, unter dem Einfluß der an dem Rad 12 auftretenden Kräfte einmal bestimmt wurde. Der Querkraftwert ist bei dem stationären Fahrverhalten idealerweise 0 N.

Ausgehend von dem mit dem Kraft-Offset korrelierten normierten Nennwert des Amplitudensignals werden die Querkräfte bei dynamischen Zuständen des Fahrzeugs in Abhängigkeit von den Amplitudenänderungen $Amp_{Nutzwert}$ nach der Beziehung

$$Amp_{Nutzwert} = \frac{Amp}{Amp_{Nennwert}}$$

bestimmt, mit Amp = Ausgangssignal(Amplitude), $Amp_{Nennwert}$ = normiertes Ausgangssignal (Nennwert), $Amp_{Nutzwert}$ = Verhältnis der Amplitude zur normierten Nennamplitude. Zusätzlich können mittels Umkehrfunktion der Abhängigkeit der Amplitude von dem Luftspalt die Amplitudenänderungen auf Abstandsänderungen nach der Beziehung

$$Dis_{Nutzwert} = k*\ln\left(\frac{Amp}{Amp_{Nennwert}}\right) = k*(\ln(Amp) - \ln(Amp_{Nennwert})) = k*\ln(Amp) - Nennabstand$$

zurückgeführt werden, mit $Dis_{Nutzwert}$ = Abstandsänderungen und k = negative Konstante, die aus der Sensorkennlinie gemäß Figur 4 ermittelt wird.

Die Querkräfte können dann im Wesentlichen als Funktion der Abstandsänderungen ermittelt werden.

**Patentansprüche**

1. Verfahren zur Erfassung und Auswertung von fahrdynamischen Zuständen eines Kraftfahrzeugs mittels Radkraftsensoren, vorzugsweise mit Reifensensoren, die als Maß für die auf das Rad bzw. den Reifen wirkenden Querkräfte den voreingestellten Luftspalt zwischen mindestens einem rotierenden Encoder und mindestens einem Meßwertaufnehmer heranziehen, **dadurch gekennzeichnet, daß** der von dem Luftspalt abhängige Betriebspunkt des Ausgangssignals des Meßwertaufnehmers oder einer Signalaufbereitungseinrichtung unabhängig von dessen Voreinstellung bei vorgegebenem Fahrverhalten eingestellt wird.

2. Verfahren nach Anspruch 1, **dadurch gekennzeichnet, daß** das Ausgangssignal bei stationärem Fahrverhalten auf mindestens einen Nennwert normiert wird.

3. Verfahren nach Anspruch 1 oder 2, **dadurch gekennzeichnet, daß** das Ausgangssignal ein sinusförmiges Wechselspannungs- oder stromsignal ist und der Nennwert bei jedem Spitzenwert der Halbwelle (Amplitude) bzw. bei jedem Wechsel der Pole oder Marken des Encoders bestimmt wird.

4. Verfahren nach einem der Ansprüche 1 bis 3, **dadurch gekennzeichnet, daß** dem Nennwert ein Wert zugeordnet wird, der den Nullpunkt(Offset) der auf das Rad oder den Reifen wirkenden Querkraft wiedergibt.

5. Verfahren nach einem der Ansprüche 1 bis 4, **dadurch gekennzeichnet, daß** die Querkräfte in Abhängigkeit von den Amplitudenänderungen nach der Beziehung

$$Amp_{Nutzwert} = \frac{Amp}{Amp_{Nennwert}}$$

bestimmt werden, mit Amp = Ausgangssignal(Amplitude), $Amp_{Nennwert}$ = normiertes Ausgangssignal (Nennwert), $Amp_{Nutzwert}$ = Verhältnis der Amplitude zur normierten Nennamplitude.

6. Verfahren nach Anspruch 5, **dadurch gekennzeichnet, daß** die Amplitudenänderungen durch eine Umkehrfunktion auf Abstandsänderungen nach der Beziehung

$$Dis_{Nutzwert} = k * \ln\left(\frac{Amp}{Amp_{Nennwert}}\right)$$

zurückgeführt werden, mit Dis$_{Nutzwert}$ = Abstandsänderungen und k = negative Konstante.

**7.** Verfahren nach Anspruch 6, **dadurch gekennzeichnet, daß** die Querkräfte im Wesentlichen als Funktion der Abstandsänderungen ermittelt werden.

**8.** Verfahren nach einem der Ansprüche 1 bis 7, **dadurch gekennzeichnet, daß** der Nennwert bis zum Erfassen des vorgegebenen Fahrverhaltens festgehalten wird.

**9.** Regelschaltung zur Erfassung und Auswertung von fahrdynamischen Zuständen eines Kraftfahrzeugs mittels Radkraftsensoren, vorzugsweise mit Reifensensoren, die als Maß für die auf das Rad bzw. den Reifen wirkenden Querkräfte den voreingestellten Luftspalt zwischen mindestens einem rotierenden Encoder und mindestens einem Meßwertaufnehmer heranziehen, **gekennzeichnet durch** eine Ermittlungseinheit, die den von dem Luftspalt abhängigen Betriebspunkt des Ausgangssignals des Meßwertaufnehmers oder einer Signal-aufbereitungseinrichtung unabhängig von dessen Voreinstellung bei vorgegebenem Fahrverhalten einstellt.

**10.** Regelschaltung nach Anspruch 9, **gekennzeichnet durch** eine Normierung des Ausgangssignals bei stationärer Fahrzeugbewegung auf mindestens einen Nennwert.

**11.** Regelschaltung nach Anspruch 9 oder 10, **dadurch gekennzeichnet, daß** das Ausgangssignal des Meßwertaufnehmers oder der Signal-Auswerteeinrichtung ein sinusförmiges Wechselspannungs- oder -stromsignal ist und die Ermittlungseinheit den Nennwert bei jedem Spitzenwert der Halbwelle (Amplitude) bzw. bei jedem Wechsel der Pole oder Marken des Encoders bestimmt.

**12.** Regelschaltung nach einem der Ansprüche 9 bis 11, **dadurch gekennzeichnet, daß** Mittel vorgesehen sind, die dem Nennwert einen Wert zuordnen, der den Nullpunkt(Offset) der Querkraft wiedergibt, und daß die Ermittlungseinheit die Querkräfte in Abhängigkeit von den Amplitudenänderungen nach der Beziehung

$$Amp_{Nutzwert} = \frac{Amp}{Amp_{Nennwert}}$$

bestimmt, mit Amp = Ausgangssignal (Amplitude), Amp$_{Nennwert}$ = normiertes Ausgangssignal (Nennwert), Amp$_{Nutzwert}$ = Verhältnis der Amplitude zur normierten Nennamplitude.

**13.** Regelschaltung nach Anspruch 12, **dadurch gekennzeichnet, daß** die Ermittlungeinheit die Amplitudenänderungen durch eine Umkehrfunktion auf Abstandänderungen nach der Beziehung

$$Dis_{Nutzwert} = k * \ln\left(\frac{Amp}{Amp_{Nennwert}}\right)$$

zurückgeführt, mit Dis$_{Nutzwert}$ = Abstandsänderungen und k = negative Konstante.

## Claims

**1.** Method for detecting and evaluating the conditions of vehicle movement dynamics of a motor vehicle by means of wheel force sensors, preferably tire sensors, which take the pre-adjusted air slot between at least one rotating encoder and at least one pick-up for measuring data into account as a standard for the transverse forces that act on the wheel or on the tire,
**characterized in that** the air-slot-dependent operating point of the output signal of the pick-up for measuring data or a signal-conditioning device is set irrespective of the pre-adjustment of the said point which was made during predetermined driving behaviour.

2. Method as claimed in claim 1,
**characterized in that** the output signal is standardized to at least one nominal value when the driving behaviour is stationary.

3. Method as claimed in claim 1 or 2,
**characterized in that** the output signal is a sinusoidal alternating voltage signal or alternating current signal, and the nominal value is determined with each peak value of the half wave (amplitude) or with each alternation of the poles or markings of the encoder.

4. Method as claimed in any one of claims 1 to 3,
**characterized in that** associated with the nominal value is a value which represents the zero point (offset) of the transverse force acting on the wheel and/or the tire.

5. Method as claimed in any one of claims 1 to 4,
**characterized in that** the transverse forces are determined in dependence on the amplitude variations according to the relation

$$Amp_{usefuleffect} = \frac{Amp}{Amp_{no\,min\,alvalue}}$$

wherein Amp = output signal (amplitude), $Amp_{nominal\,value}$ = standardized output signal (nominal value), $Amp_{usefuleffect}$ = ratio between the amplitude and the standardized nominal amplitude.

6. Method as claimed in claim 5,
**characterized in that** the amplitude variations are attributed by means of an inverse function to changes in distance according to the relation

$$Dis_{usefuleffect} = k * \ln\left(\frac{Amp}{Amp_{no\,min\,alvalue}}\right)$$

wherein $Dis_{useful\,effect}$ = changes in distance and k = negative constant.

7. Method as claimed in claim 6,
**characterized in that** the transverse forces are basically determined as a function of the changes in distance.

8. Method as claimed in any one of claims 1 to 7,
**characterized in that** the nominal value is maintained until the predetermined driving behaviour is detected.

9. Control circuit for detecting and evaluating the conditions of vehicle movement dynamics of a motor vehicle by means of wheel force sensors, preferably tire sensors, which take the pre-adjusted air slot between at least one rotating encoder and at least one pick-up for measuring data into account as a standard for the transverse forces that act on the wheel or on the tire,
**characterized by** a determination unit which sets the air-slot-dependent operating point of the output signal of the pick-up for measuring data or a signal-conditioning device irrespective of the said point's pre-adjustment which was made during predetermined driving behaviour.

10. Control circuit as claimed in claim 9,
**characterized by** a standardization of the output signal to at least one nominal value when the vehicle movement behaviour is stationary.

**11.** Control circuit as claimed in claim 9 or 10,
**characterized in that** the output signal of the pick-up for measuring data or the signal-evaluating device is a sinusoidal alternating voltage signal or alternating current signal, and the determination unit determines the nominal value with each peak value of the half wave (amplitude) or with each alternation of the poles or markings of the encoder.

**12.** Control circuit as claimed in any one of claims 9 to 11,
**characterized in that** there is provision of means attributing a value to the nominal value which represents the zero point (offset) of the transverse force, and **in that** the determination unit determines the transverse forces in dependence on the amplitude variations according to the relation

$$Amp_{usefuleffect} = \frac{Amp}{Amp_{no\ min\ alvalue}}$$

wherein Amp = output signal (amplitude), $Amp_{nominal\ value}$ = standardized output signal (nominal value), $Amp_{usefuleffect}$ = ratio between the amplitude and the standardized nominal amplitude.

**13.** Control circuit as claimed in claim 12,
**characterized in that** the determination unit attributes the amplitude variations by means of an inverse function to changes in distance according to the relation

$$Dis_{usefuleffect} = k * \ln\left(\frac{Amp}{Amp_{no\ min\ alvalue}}\right)$$

wherein $Dis_{useful\ effect}$ = changes in distance and k = negative constant.

## Revendications

**1.** Procédé de détection et d'exploitation d'états dynamiques de conduite d'un véhicule automobile au moyen de capteurs de force des roues, de préférence au moyen de capteurs de pneu, qui utilisent, comme critère des forces transversales agissant sur la roue ou le pneu, l'entrefer préréglé entre au moins un codeur rotatif et au moins un transducteur de valeurs mesurées, **caractérisé en ce que** le point de fonctionnement, dépendant de l'entrefer, du signal de sortie du transducteur de valeurs mesurées ou d'un dispositif de traitement de signaux, est réglé indépendamment de son préréglage pour une conduite prédéfinie.

**2.** Procédé selon la revendication 1, **caractérisé en ce que** le signal de sortie est normalisé sur au moins une valeur nominale pour une conduite stationnaire.

**3.** Procédé selon la revendication 1 ou 2, **caractérisé en ce que** le signal de sortie est un signal sinusoïdal de tension alternative ou de courant, et la valeur nominale est déterminée pour chaque valeur de pointe de la demi-onde (amplitude) ou à chaque changement des pôles ou marques du codeur.

**4.** Procédé selon l'une des revendications 1 à 3, **caractérisé en ce qu'**à la valeur nominale est associée une valeur qui traduit le point zéro (offset) de la force transversale agissant sur la roue ou le pneu.

**5.** Procédé selon l'une des revendications 1 à 4, **caractérisé en ce que** les forces transversales sont déterminées en fonction des variations de l'amplitude suivant la relation

$$Amp_{Nutzwert} = \frac{Amp}{Amp_{Nennwert}}$$

avec Amp = signal de sortie (amplitude), $Amp_{Nennwert}$ = signal de sortie normalisé (valeur nominale), $Amp_{Nutzwert}$

= rapport de l'amplitude à l'amplitude nominale normalisée.

**6.** Procédé selon la revendication 5, **caractérisé en ce que** les variations d'amplitude sont rapportées, par une fonction d'inversion, à des variations de la distance suivant la relation

$$Dis_{Nutzwert} \; = \; k*In\left(\frac{Amp}{Amp_{Nennwert}}\right)$$

avec $Dis_{nutzwert}$ = variations de la distance et k = constante négative.

**7.** Procédé selon la revendication 6, **caractérisé en ce que** les forces transversales sont déterminées essentiellement comme fonction des variations de la distance.

**8.** Procédé selon l'une des revendications 1 à 7, **caractérisé en ce que** la valeur nominale est fixée jusqu'à la détection de la conduite prédéfinie.

**9.** Circuit de régulation pour la détection et l'exploitation d'états dynamiques de conduite d'un véhicule automobile au moyen de capteurs de force des roues, de préférence au moyen de capteurs de pneu, qui utilisent, comme critère des forces transversales agissant sur la roue ou le pneu, l'entrefer préréglé entre au moins un codeur rotatif et au moins un transducteur de valeurs mesurées, **caractérisé par** une unité de détermination qui règle le point de fonctionnement, dépendant de l'entrefer, du signal de sortie du transducteur de valeurs mesurées ou d'un dispositif de traitement de signaux, indépendamment de son préréglage pour une conduite prédéfinie.

**10.** Circuit de régulation selon la revendication 9, **caractérisé par** une normalisation du signal de sortie sur au moins une valeur nominale, en cas de mouvement stationnaire du véhicule.

**11.** Circuit de régulation selon la revendication 9 ou 10, **caractérisé en ce que** le signal de sortie du transducteur de valeurs mesurées ou le dispositif d'exploitation des signaux est un signal sinusoïdal de tension alternative ou de courant alternatif, et l'unité de détermination détermine la valeur nominale à chaque valeur de pointe de la demi-onde (amplitude) ou à chaque changement des pôles ou marques du codeur.

**12.** Circuit de régulation selon l'une des revendications 9 à 11, **caractérisé en ce que** sont prévus des moyens qui associent à la valeur nominale une valeur qui traduit le point zéro (offset) de la force transversale, et **en ce que** l'unité de détermination détermine des forces transversales en fonction des variations de l'amplitude suivant la relation

$$Amp_{Nutzwert} = \frac{Amp}{Amp_{Nennwert}}$$

avec Amp = signal de sortie (amplitude), $Amp_{Nennwert}$ = signal de sortie normalisé (valeur nominale), $Amp_{Nutzwert}$ = rapport de l'amplitude à l'amplitude nominale normalisée.

**13.** Circuit de régulation selon la revendication 12, **caractérisé en ce que** l'unité de détermination rapporte les variations de l'amplitude par une fonction d'inversion à des variations de la distance suivant la relation

$$Dis_{Nutzwert} \; = \; k*In\left(\frac{Amp}{Amp_{Nennwert}}\right)$$

avec $Dis_{nutzwert}$ = variations de la distance et k = constante négative.

# Fig. 1a,b

Zentrifugalkraft des Fahrzeugs

Bewegung des Rades

Fahrbahn

Querkraft des Reifens

N,S

# Fig. 2

# Fig. 3